# EUROPÄISCHE PATENTSCHRIFT

(11) **EP 1 456 570 B1**
(45) Veröffentlichungstag und Bekanntmachung des Hinweises auf die Patenterteilung: **04.10.2006**
(21) Anmeldenummer: 02794981.7
(22) Anmeldetag: 10.12.2002
(51) Int. Cl.: F16K 31/06

(54) **VENTIL MIT DÄMPFUNGSELEMENT**
VALVE COMPRISING A DAMPING ELEMENT
SOUPAPE DOTEE D'UN ELEMENT D'AMORTISSEMENT

(30) Priorität: 11.12.2001 DE 10160970
(43) Veröffentlichungstag der Anmeldung: 15.09.2004
(73) Patentinhaber: ROBERT BOSCH GMBH, 70442 Stuttgart (DE)
(72) Erfinder: HESS, Juergen, 76534 Baden-Baden (DE); REEB, Georg, 77815 Buehl Eisental (DE); HEIN, Bernd, 72270 Baiersbronn/Schoenmuenzach (DE)
(86) Internationale Anmeldenummer: PCT/DE2002/004502
(87) Internationale Veröffentlichungsnummer: WO 2003/054428

(56) Entgegenhaltungen:
- EP-A- 0 482 398
- DE-A- 10 017 030
- US-A- 5 579 741
- US-A- 5 937 884

## Beschreibung

### Stand der Technik

Die Erfindung geht aus von einem Ventil nach der Gattung des unabhängigen Anspruchs.

Derartige Ventile sind beispielsweise aus flüssigkeitsgeregelten Heiz- beziehungsweise Kühlanlagen von Kraftfahrzeugen bekannt. Ein auf einer Hubstange des Ventils befestigtes Ventilglied regelt den Durchfluss zwischen einem Einlasskanal und mindestens einem Auslasskanal. Das Ventil kann beispielsweise in Abhängigkeit von Temperaturen in der Heiz- und/oder Klimaanlage des Kraftfahrzeuges beziehungsweise des Fahrgastraumes angesteuert werden. Ventile dieser Art weisen zur Zeit hauptsächlich noch einen elektromagnetischen Aktuator auf, der durch eine erregte Magnetspule das Ventil schließt, indem der Aktuator auf einen, mit der Hubstange des Ventils verbundenen Anker einwirkt. Nachteil bei dieser Art des Ventils ist es, dass die Betätigung des Aktuators zu einem abrupten Schließen und damit zu Druckstörungen im Flüssigkeitssystem des Kühlkreislaufs führt.

Die derzeitig bekannten Wasserventile für den Heiz- und/oder Kühlkreislauf von Kraftfahrzeugen sind darüber hinaus bei Ausübung der beschriebenen Schaltfunktion teilweise sehr laut. Die Geräuschbildung resultiert unter Anderem aus einer nicht ausreichenden Dämpfung der mechanischen Arbeitsbewegung der Hubstange.

Aus der DE 197 54 257 A1 ist ein Magnetventil für eine flüssigkeitsgeregelte Heiz- und/oder Kühlanlage bekannt, welches einen Zulaufkanal und mindestens einen Ablaufkanal aufweist, deren gegenseitige Verbindung durch ein elektromagnetisch geschaltetes Ventilglied in einer ersten Schaltstellung hergestellt und in einer zweiten Schaltstellung gesperrt wird. Das Ventil der DE 197 54 257 A1 weist an seinem Ventilschaft ein elastisches Element in Form einer Feder auf, die die Geschwindigkeit des Ventilschaftes beim Schließen des Ventilgliedes verzögert. Dazu ist das Federelement zwischen dem Ventilglied und dem Ventilschaft angeordnet.

In einer zweiten Ausführungsform des Wasserventils des DE 197 54 257 A1 ist auf dem Ventilschaft zusätzlich eine Dämpfungsscheibe fest angeordnet, die sich in einer mit einer viskosen Flüssigkeit gefüllten Dämpfungskammer bewegt. Zur Abstimmung der Dämpfungswirkung für das Ventilglied sind in der Dämpfungsscheibe mehrere Dämpfungswirkung für das Ventilglied sind in der Dämpfungsscheibe mehrere Drosselbohrungen vorgesehen, die den Widerstand der Dämpfungsscheibe gegenüber der viskosen Flüssigkeit bestimmen und somit in gewünschter Weise die Bewegung der Hubstange verzögern.

Aus der US 4,364,541 ist ein Sicherheitsventil bekannt, das eine zweiteilige Hubstange besitzt. Während der erste Teil der Hubstange mit einem Aktuator für das Ventil verbunden ist, trägt der zweite Teil der Hubstange zwei beabstandet voneinander angeordnete Ventilglieder. Die beiden Teile der Hubstange der US 4,364,541 sind in axialer Richtung der Hubstange gegeneinander verschiebbar. Die relative Beweglichkeit der beiden Hubstangenteile zueinander wird über ein elastisches Federelement vermittelt.

Nachteilig bei dem in der US 4,364,541 beschriebenem Sicherheitsventil ist die aufwendige gegenseitige Entkopplung der beiden Hubstangenanteile. Zusätzlich muß die relative Beweglichkeit der beiden Hubstangenanteile bei diesem Stand der Technik durch ein zusätzliches Federelement eingestellt werden. Ein solches Ventil bedarf, ebenso wie das Ventil der DE 197 54 257 A1, einer aufwendigen Montage, nicht zuletzt aufgrund der Vielzahl der Einzelteile. Zudem führt die komplexe Ausgestaltung der beweglichen Teile des Ventils zu erhöhten Anforderungen an den Aktuator, die wiederum mit einem erhöhten Gewicht und einen großen Einbauvolumen der Ventileinheit einher gehen.

Aus der US-A-5 579 741 ist ein Kontrollventil für Dampf, insbesondere Kraftstoffdampf eines Verbrennungsmotors, bekannt. Dieses getaktete Ventil weist eine Hubstange und ein auf der Hubstange befestigtes Ventilglied auf, welches mit einem Ventilsitz einer Ventilkammer zusammenwirkt. Das Ventilglied weist an seiner dem Ventilsitz zugewandten Seite einen konisch ausgeformten Ring aus einem flexiblen Material auf, der sich bei Schließen des Ventils auf die Umrandung des Ventilsitzes legt. Die Größe und Form dieses konischen Ringes, der am Ventilglied des Ventils der US-A-5 579 741 ausgebildet ist, ist derart gewählt, dass der Ring beim Schließen des Ventils seine notwendige Form erhält, beim Schließvorgang aufgrund einer Dämpfungswirkung jedoch zu einer Geräuschreduzierung führt.

### Vorteile der Erfindung

Das erfindungsgemäße Ventil mit den Merkmalen des Hauptanspruchs hat demgegenüber den Vorteil, dass eine einfache und schnelle Montage bei der Fertigung von gattungsgemäßen Ventilen möglich ist. Das Ventilgewicht kann zudem deutlich reduziert werden. In vorteilhafter Weise übernimmt das Dämpfungselement gleichzeitig die Dichtfunktion am Ventilsitz des Ventils. Auf diese Weise wird eine Vielzahl von Komponenten bei der Montage des Ventils eingespart, dessen Komplexität und Ausfallwahrscheinlichkeit wird zudem reduziert.

Dadurch, dass das Ventilglied gleichzeitig als elastisches Dämpfungselement ausgelegt wird, kann auf zusätzliche elastische Komponenten, wie beispielsweise Federelemente, verzichtet werden.

In vorteilhafter Weise ist das Ventilglied dabei beweglich auf der Hubstange des Ventils angebracht. Das Dämpfungselement, beispielsweise in Form eines Dichtgummis, lasst sich auf der Hubstange axial in gewissen Bereichen verschieben. Durch diese Verschiebbarkeit des Dämpfungselementes in Verbindung mit einem Begrenzer für den Verschiebungsweg wird eine Dämpfung in Arbeitsrichtung der Hubstange des Ventils beim Schließen erreicht. Sowohl die elastische Materialeigenschaften des Ventilgliedes, das in vorteilhafter Weise gleichzeitig als Dämpfungselement dient, als auch die relative Beweglichkeit der Hubstange gegenüber dem Ventilglied führt zu einer Verzögerung der Geschwindigkeit der Hubstange beim Schließen des Ventils. Damit einhergehend kommt es zu einer Reduzierung der Geräuschbildung und mechanischen Beanspruchung bei der Aktivierung des erfindungsgemäßen Ventils.

Durch die in den weiteren Ansprüchen aufgeführten Maßnahmen sind vorteilhafte Weiterbildungen und Verbesserungen des in Anspruch 1 angegebenen Ventils möglich.

Der Begrenzer für den Verschiebungsweg des Dämpfungselementes läßt sich in einfacher und vorteilhafter Weise als mechanischer Anschlag für das Ventilglied realisieren. Dazu kann ein Dämpferring oder auch ein Anschlagteller, beispielsweise einstückig mit der Hubstange verbunden sein.

In vorteilhafter Weise weist dieser mechanische Anschlag auf seiner dem Dämpfungselement zugewandten Seite eine Oberflächenkontur auf, die derart gestaltet ist, dass diese Oberflächenkontur beim Schließen des Ventils sukzessive in das elastische Dämpfungselement eintauchen kann. Auf diese Weise läßt sich eine Dämpfungskennlinie für das Ventil realisieren, die zu einer progressiven Dämpfung der Hubstange des Ventils beim Schließvorgang führt.

In einer vorteilhaften Ausführungsform weist die Oberflächenkontur des Bewegungsbegrenzers für das Dämpfungselement eine speichenförmige, von der zentralen Hubstange ausgehende Grundstruktur auf. Auf diese Weise ergibt sich beim Eintauchen der Kontur in das elastische Dämpfungselement eine stetige Vergrösserung der Auflagefläche des Dämpfungselementes auf dem mechanischen Anschlag des Dämpferringes, was zu einer progressiven Abbremsung der Hubstange führt.

Dämpfungsverhalten und somit die Geräuschentwicklung beim Betrieb des Ventils positiv beeinflussen und den Erfordernissen anpassen.

In vorteilhafter Weise kann der mechanische Anschlag, nebst seiner speziellen Oberflächenkontur, einstückig an der Hubstange ausbildet werden. Altemativerweise sind jedoch auch montierbare und somit auswechselbare Begrenzer für den Hub des elastischen Dämpfungselementes möglich. Durch einen Wechsel der mechanischen Anschläge läßt sich dann in einfacher Weise die Dämpfungscharakteristik des erfindungsgemäßen Ventils anwendungsbezogen variieren.

Das als Dämpfungselement dienende Ventilglied kann in einer vorteilhaften Ausgestaltung des erfindungsgemäßen Ventils in einfacher Weise auf die Hubstange aufpresst werden.

Die Verwendung des erfindungsgemäßen Ventils, beispielsweise in der Ausführungsform eines elektromagnetischen Taktventils für den Kühl- und/oder Heizkreislauf eines Kraftfahrzeuges ist mit Vorteilen gegenüber den entsprechenden Ventilen des Standes der Technik möglich.

Das erfindungsgemäße Ventil ermöglicht auf ein einfache Weise eine deutliche Reduzierung der Geräuschbildung beim Schalten des Ventils bei gleichzeitiger Reduzierung der für die Dämpfung benötigten Bauteile und Komponenten. Das erfindungsgemäße Ventil gewährleistet zudem eine schnellere Montage und damit reduzierte Kosten bei der Produktion der gattungsgemäßen Ventile.

### Zeichnung

In der Zeichnung ist ein Ausführungsbeispiel eines erfindungsgemäßen Ventils dargestellt, das in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen:
- Figur 1: einen Querschnitt durch ein erfindungsgemäßes Ventil in der Ausführungsform eines elektromagnetischen Taktventils,
- Figur 2: einen Schnitt durch die Ventilkammer eines erfindungsgemäßen Ventils bei geöffneter Ventilstellung,
- Figur 3: einen Schnitt durch die Ventilkammer eines erfindungsgemäßen Ventils gemäß Figur 2 bei beginnender Schließung des Ventils,
- Figur 4: einen Schnitt durch die Ventilkammer eines erfindungsgemäßen Ventil gemäß Figur 2 und Figur 3 bei geschlossenem Ventil.
- Figur 5: das Ventilglied eines erfindungsgemäßen Ventils in einer Detailansicht und
- Figur 6: die Hubstange eines erfindungsgemäßen Ventils im Bereich des Ventilgliedes in einer perspektivischen Darstellung.

### Beschreibung der Ausführungsbeispiele

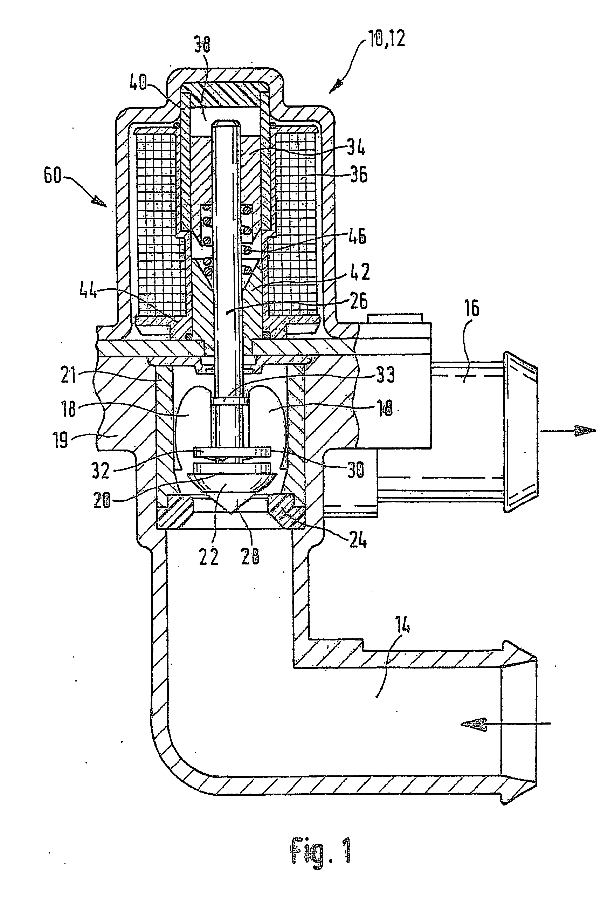

Das erfindungsgemäße Ventil 10 in der Ausführungsform eines Magnetventils 12 gemäß Figur 1 besitzt einen Einlasskanal 14 und einen Auslasskanal 16, die über eine Ventilkammer 18 miteinander verbunden sind. Die Ventilkammer 18 wird gebildet durch eine in das Ventilgehäuse 19 eingesetzte Ventilkammereinheit 21. Zwischen den Kanälen 14 und 16 ist ein Ventilglied 20 vorgesehen, welches in der Ventilkammer 18 beweglich angeordnet ist und über einen elastischen Ventilkegel 22 mit einem Ventilsitz 24 der Ventilkammer 18 zusammenwirkt. Der Ventilsitz 24 ist im Ausführungsbeispiel der Figur 1 als ein elastischer, die Ventilkammer 18 gegenüber dem Einlasskanal 14 begrenzender Ring ausgeführt.
Aufgrund des elastischen Ventilsitzes 24 muss der Ventilkegel 22 des Ventilgliedes 20 in diese Ausführungsbeispiel nicht notwendigerweise auch elastisch sein.

Das Ventilglied 20 ist auf einer Hubstange 26 axial verschiebbar gelagert und ist an dem, dem Ventilsitz 24 zugewendeten Ende der Hubstange 26 durch einen Sicherungsteller 28 auf der Hubstange 26 gesichert. Auf der dem Ventilsitz 24 abgekehrten Seite des Ventilgliedes 20 befindet sich ein Dämpferring 30 in Form eines mechanischen Anschlagtellers 32, der fest mit der Hubstange 26 verbunden ist und als Begrenzer die axiale Beweglichkeit des Ventilgliedes 20 entlang der Hubstange 26 einschränkt.

Auf der Hubstange 26 ist zudem ein Abstreiferring 33 und ein Anker 34 befestigt, der mit einer Magnetspule 36 zusammenwirkt und den elektromagnetischen Aktuator 60 für das erfindungsgemäße Ventil in der Ausführungsform nach Figur 1 bildet. Der Anker 34 ist in einem Ankerraum 38 des Aktuators 60 durch eine Führungsbuchse 40 axial verschiebbar geführt ist.

Der vorherrschende Flüssigkeitsdruck, beispielsweise in einem zu regelnden Heiz- und/oder Kühlkreislauf eines Kraftfahrzeuges, der sich im Einlasskanal 14 des erfmdungsgemäßen Ventils einstellt, verschiebt das Ventilglied 20 in seine geöffnete Stellung, so dass der Ventilkegel 22 vom Ventilsitz 24 angehoben ist. Wird die Magnetspule 36 erregt, so zieht ein Ankerkern 42, der mit einem Rückschlussjoch 44 des Aktuators 60 in Verbindung steht, den Anker 34 entgegen der Kraft einer im Ankerraum 38 angeordneten Ventilfeder 46 und dem Flüssigkeitsdruck im Einlasskanal 14, an und das Ventilglied 20 verschließt die Verbindung zwischen dem Einlasskanal 14 und dem Ablaufkanal 16 des Ventils 12, indem der Ventilkegel 22 auf den Ventilsitz 24 aufgedrückt wird.

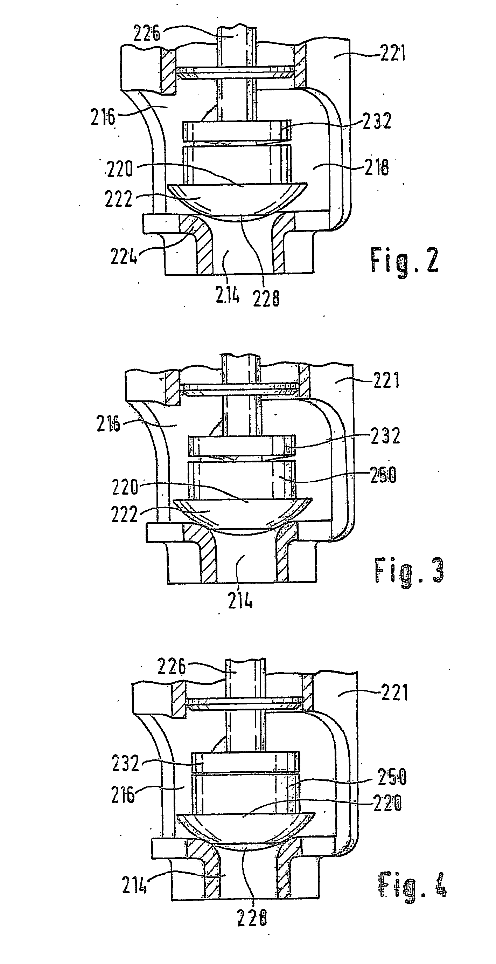

In den Figuren 2, 3 und 4 ist dieser Schliessvorgang nochmals zur Verdeutlichung des erfindungsgemäßen Ventils in seinen wesentlichen Phasen dargestellt. Figur 2 zeigt eine Detailansicht eines erfindungsgemäßen Ventil1 10 im Bereich seiner Ventilkammer 218. In die Ventilkammer 218, die in diesem Ausführungsbeispiel von einer einstückigen Ventilkammereinheit 221 gebildet wird, führt ein Einlasskanal 214 sowie ein Auslasskanal 216. Die Verbindung zwischen dem Einlasskanal 214 und dem Auslasskanal 216 wird durch ein Ventilglied 220 vermittelt, welches mit einem Ventilsitz 224 der Ventilkammer 218 zusammenwirkt. Im Ausführungsbeispiel der Figur 2 ist der Ventilsitz 242 einstückig mit dem Ventilgehäuse 248 ausgebildet. Andere Ausführungsformen des Ventilsitzes eines erfindungsgemäßen Ventils 10 sind selbstverständlich ebenso möglich.

Das Ventilglied 220 wird über eine Hubstange 226 von einem nicht näher dargestellten Aktuator betätigt, der nicht notwendigerweise ein magnetischer Aktivator sein muss. Auf der Hubstange 226 befindet sich zudem im Bereich des Ventilgliedes 220 ein Sicherungsteller 228, der die axiale Beweglichkeit des Ventilgliedes 220 auf der Hubstange 226 einseitig begrenzt.

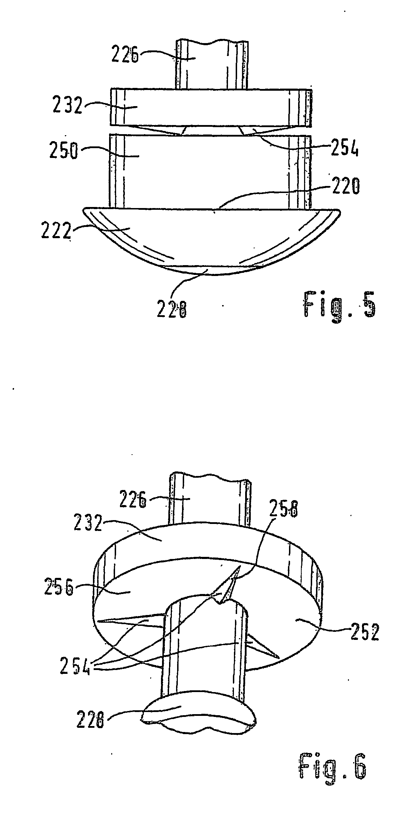

In Figur 5 ist das dem Ventilsitz 224 zugekehrte Ende der Hubstange 226 noch einmal im Detail dargestellt. Das Ventilglied 220 besteht aus einem elastischen Ventilkegel 222, der mit dem Ventilsitz 224 zusammenwirkt. Auf der dem Ventilsitz 224 abgekehrten Seite des Ventilkegels 222 besteht das Ventilglied 220 im Ausführungsbeispiel der Figuren 2 und 5 aus einem elastischen Ventilring 250, der in diesem Ausführungsbeispiel fest mit dem Ventilkegel 222 verbunden ist.

In weiteren Ausführungsformen des erfindungsgemäßen Ventils 10 kann der elastische Ventilring 250 einstückig mit dem Ventilkegel 222 ausgebildet sein und beispielsweise auch aus dem gleichen elastischen Dichtgummi-Material wie der Ventilkegel 222 bestehen.

Auf der dem Ventilsitz 224 zugekehrten Seite der Hubstange 226 ist das Ventilglied 220 mittels des Sicherungstellers 228 auf der Hubstange gekontert. Dazu kann beispielsweise das Ventilglied 220 über den Anschlagteller 228, der im Ausführungsbeispiel einen größeren Durchmesser als die Hubstange 226 besitzt, gestülpt werden. Der Anschlagteller 228 kann einstückig mit der Hubstange 226 ausgebildet sein oder aber auch durch geläufige Verbindungsverfahren an der Hubstange fixiert sein.

Auf der dem Ventilsitz 224 abgekehrten Seite des Ventilgliedes 220 ist ein als Begrenzer dienender Anschlagteller 232 derart auf der Hubstange 226 fixiert, dass eine relative Bewegung des Ventilgliedes 220 zwischen dem Sicherungsteller 228 und diesem Anschlagteller 232 möglich ist. Der Anschlagteller 232 kann sowohl einstückig mit der Hubstange ausgeführt sein, als auch auf andere, dem Fachmann wohlbekannte Arten, mit der Hubstange fest verbunden sein. Auf seiner dem Ventilglied 220 zugewandten Unterseite 252 weist, wie insbesondere in Figur 6 zu erkennen ist, der Anschlagteller 232 eine speichenförmige Oberflächenstruktur 254 auf, die aus der Oberfläche 256 der Unterseite 252 des Anschlagtellers hervortritt.

Eine perspektivische Detailansicht des Anschlagtellers 232, der Übersicht und Klarheit halber bei entferntem Ventilglied, ist in der Figur 6 dargestellt. In diesem Ausführungsbeispiel besitzt der auf der Hubstange 226 montierte Anschlagteller 232 drei speichenförmig von der Hubstange 226 radial nach aussen weisende Erhebungen 258 auf, die in Richtung auf das Ventilglied 220, beziehungsweise in Richtung auf den Sicherungsteller 228 hin, spitz zulaufen und in ihrer Höhe über der Oberfläche 256 der Unterseite 252 des Anschlagtellers 232, von der Hubstange 226 ausgehend, radial nach aussen abnehmen.

Andere als in der Figur 6 dargestellte Oberflächenkonturen 254 der Unterseite 252 des Anschlagtellers 232 sind selbstverständlich ebenfalls möglich.

Im Fall des geöffneten Ventils, wie es beispielsweise in Figur 2 dargestellt ist, befindet sich das Ventilglied 220 beabstandet von der Unterseite 252 des Anschlagtellers 232 auf der Hubstange. Wird das Ventil durch Betätigung seines Aktuators geschlossen, so setzt durch Vermittlung der Hubstange 226 zuerst der Ventilkegel 222 auf den Ventilsitz 224 auf, wie es auch in Figur 3 dargestellt ist. Die weitere Schliessbewegung der Hubstange 226 führt sodann zu einer Relativbewegung der Hubstange 226 mit dem auf ihr befestigten Anschlagteller 232 gegenüber dem Ventilglied 220. Dabei taucht die Oberflächenkontur 254 auf der Unterseite 252 des Anschlagtellers 232 in das elastische Material des Ventilgliedes 220 ein. Die Abwärtsbewegung der Hubstange 226 wird dadurch abgebremst und eine eventuelle Geräuschbildung beim Schließen des Ventils deutlich reduziert.

Die Oberflächenkontur 254 auf der Unterseite 252 des Anschlagtellers 232 ist in dem in Figur 6 dargestellten Ausführungsbeispiel durch eine stetige Vergrösserung des Querschnitts entgegen der Arbeitsrichtung der Hubstange 226 gekennzeichnet. Beim Eintauchen der Oberflächenkontur 254 des Anschlagtellers 232 in das elastische Material des Ventilrings 250 ergibt sich daher eine progressive Dämpfungskennlinie.

Durch die Modifikation der Oberflächenkontur 254 des Anschlagtellers 232 beziehungsweise durch eine Variation der Härte des Ventilringes 250 läßt sich das Dämpfungsverhalten des erfindungsgemäßen Ventils und somit auch dessen Geräuschentwicklung im Betrieb des Ventils positiv beeinflussen. Dies kann in vorteilhafter Weise auch ohne Änderung der Materialeigenschaften des eigentlichen Ventilkegels 222 geschehen. Dazu kann beispielsweise der Ventilring 250 ein anderes Material als der Ventilkegel 222 aufweisen. Auch ist es möglich, den Ventilring 250 vom Ventilkegel 222 zu trennen, und das Ventilglied 220 mehrstückig auszuführen, so dass eine zusätzliche relative Bewegung zwischen diesen beiden Elementen des Ventilgliedes 220 möglich wird.

Am Ende des durch den Aktuator vermittelten Arbeitshubs zum Schließen des erfindungsgemäßen Ventils liegt, wie in Figur 4 dargestellt, die Unterseite 252 des Anschlagtellers 232 auf der Oberfläche des Ventilrings 250 nahezu plan auf.

Das erfindungsgemäße Ventil ist nicht auf die in den Figuren 1 bis 6 dargestellten Ausführungsformen beschränkt.

Insbesondere ist das erfindungsgemäße Ventil nicht beschränkt auf eine Ausführungsform als elektromagnetisch aktiviertes Taktventil. Hydraulische oder pneumatisches Aktuatoren sind beispielsweise neben weiteren Ausführungsformen für das erfindungsgemäße Ventil ebenso möglich.

Auch ist das erfindungsgemäße Ventil nicht beschränkt auf das Vorliegen lediglich eines Ventilgliedes mit zugehörigem Anschlagteller, sondern kann in vorteilhafter Weise auch für Ventile mit beispielsweise zwei Auslasskanälen mit entsprechend zugeordneten zwei Ventilsitzen verwendet werden. In diesem Fall kann eine Ausführungsform des erfindungsgemäßen Ventils mit zwei Ventilgliedern mit den jeweils zugehörigen Anschlagtellern vorgesehen sein.

Das erfindungsgemäße Ventil ist nicht beschränkt auf die im Ausführungsbeispiel der Figur 1 dargestellte Flussrichtung des zu regelnden Fluids.

Das erfindungsgemäße Ventil ist insbesondere nicht beschränkt auf die in den Ausführungsbeispielen dargestellte Form der Oberflächenkontur des Anschlagtellers für das Ventilglied. Insbesondere ist diese Oberflächenkontur in ihrer Form nicht beschränkt auf die in Figur 6 dargestellte Ausführungsform. Andere, spitz oder unspitz auf das Ventilglied zulaufende Oberflächenstrukturen lassen sich je nach gewünschtem Dämpfungsverhalten ebenso für das erfindungsgemäße Ventil realisieren. Auch unterliegt die Anzahl und Form der in Figur 6 speichenförmig dargestellten Erhebungen auf der Unterseite des Anschlagtellers keiner zahlenmäßigen Begrenzung oder sonstigen Einschränkung in der Form Andere als speichenförmige Dämpfungskonturen sind selbstverständlich ebenfalls möglich.

Das erfindungsgemäße Ventil ist zudem nicht begrenzt auf eine Anwendung in flüssigkeitsgeregelten Heiz- und/oder Kühlanlagen für Kraftfahrzeuge.

## Patentansprüche

1. Ventil, insbesondere für eine flüssigkeitsgeregelte Heiz- und / oder Kühlanlage eines Kraftfahrzeugs, mit einer Ventilkammer (18, 218), mit davon abzweigend mindestens einem Einlass- (14, 214) und mindestens einem Auslasskanal (16, 216) sowie mit einer durch einen Aktuator bewegbaren Hubstange (26, 226) und mit mindestens einem auf der Hubstange (26, 226) befindlichen Ventilglied (20, 220), welches mit mindestens einem Ventilsitz (24, 224) der Ventilkammer (18, 218) zusammenwirkt, wobei mindestens ein Dämpfungselement (20, 220) vorgesehen ist, das die Geschwindigkeit der Hubstange (26, 226) beim Schließen des Ventils (10, 12) verzögert und gleichzeitig als Ventilglied (20, 220) dient, **dadurch gekennzeichnet, dass** das mindestens eine Dämpfungselement (20, 220) relativ zur Hubstange (26, 226) beweglich, insbesondere auf der Hubstange (26, 226) axial verschieblich ist.

2. Ventil nach Anspruch 1, **dadurch gekennzeichnet, dass** das mindestens eine Dämpfungselement (20,220) ein zumindest teilweise elastischer Körper ist, der auf der Hubstange (26,226) angeordnet ist.

3. Ventil nach Anspruch 2, **dadurch gekennzeichnet, dass** die Hubstange (26,226) Mittel (28,30,32,228,232) aufweist, die die Beweglichkeit des Dämpfungselementes (20,220) relativ zur Hubstange (26,226) begrenzen.

4. Ventil nach Anspruch 3, **dadurch gekennzeichnet, dass** die Mittel (28,30,32,228,232) in Form eines mechanischen Anschlages ausgebildet sind.

5. Ventil nach Anspruch 4, **dadurch gekennzeichnet, dass** mindestens ein mechanischer Anschlag (30,32,232) auf seiner dem Dämpfungselement (20,220) zugewandten Seite (252) eine dem Dämpfungselement (20,220) entgegen gerichtete Oberflächenkontur (254) aufweist, die beim Schließen des Ventils (10,12) sukzessive in das Dämpfungselement (20,220) eintaucht.

6. Ventil nach Anspruch 5, **dadurch gekennzeichnet, dass** die Oberflächenkontur (254) des mindestens einen mechanischen Anschlages (30,32,232) des Dämpfungselementes (20,220) derart ausgestaltet ist, dass sich eine progressive Dämpfungskennlinie für die Hubstange (26,226) des Ventils (10,12) ergibt.

7. Ventil nach Anspruch 5 oder 6, **dadurch gekennzeichnet, dass** die Oberflächenkontur (252) des mechanischen Anschlages (32,232) eine speichenförmige, von der Hubstange radial nach aussen verlaufende Grundstruktur aufweist.

8. Ventil nach einem der Ansprüche Anspruch 5 bis 7, **dadurch gekennzeichnet, dass** die Oberflächenkontur (254) des mechanischen Anschlages (30,32,232) in Richtung auf das Dämpfungselement (20,220) hin spitz zuläuft.

9. Ventil nach einem der Ansprüche 3 bis 8, **dadurch gekennzeichnet, dass** die Mittel (28,30,32,228,232) einstückig mit der Hubstange (26,226) ausgebildet sind.

10. Ventil nach einem der vorhergehenden Ansprüche, **dadurch gekennzeichnet, dass** die Hubstange (26,226) im Wesentlichen aus Kunststoff gefertigt ist.

11. Ventil nach Anspruch 10, **dadurch gekennzeichnet, dass** das mindestens eine Ventilglied (20,220) auf die Hubstange (26,226) direkt aufgepresst ist.

12. Ventil nach einem der vorhergehenden Ansprüche, **dadurch gekennzeichnet, dass** das Ventil (10,12) einen elektromagnetischen Aktuator (60) besitzt.

13. Ventil nach einem der vorherigen Ansprüche, **dadurch gekennzeichnet, dass** von der Ventilkammer (18,218) des Ventils (10,12) ein zweiter Auslasskanal mit zugehörigem Ventilsitz und Ventilglied abzweigt.

## Claims

1. Valve, in particular for a liquid-regulated heating and/or cooling system of a motor vehicle, with a valve chamber (18, 218), with, branching off from the latter, at least one inlet duct (14, 214) and at least one outlet duct (16, 216), and also with a stroke rod (26, 226) movable by means of an actuator and with at least one valve member (20, 220) which is located on the stroke rod (26, 226) and which cooperates with at least one valve seat (24, 224) of the valve chamber (18, 218), at least one damping element (20, 220) being provided, which decelerates the speed of the stroke rod (26, 226) during the closing of the valve (10, 12) and serves at the same time as a valve member (20, 220), **characterized in that** the at least one damping element (20, 220) is movable in relation to the stroke rod (26, 226), in particular is displaceable axially on the stroke rod (26, 226).

2. Valve according to Claim 1, **characterized in that** the at least one damping element (20, 220) is an least partially elastic body which is arranged on the stroke rod (26, 226).

3. Valve according to Claim 2, **characterized in that** the stroke rod (26, 226) has means (28, 30, 32, 228, 232) which limit the movability of the damping element (20, 220) in relation to the stroke rod (26, 226).

4. Valve according to Claim 3, **characterized in that** the means (28, 30, 32, 228, 232) are designed in the form of a mechanical stop.

5. Valve according to Claim 4, **characterized in that** at least one mechanical stop (30, 32, 232) has, on its side (252) facing the damping element (20, 220), a surface contour (254) which is directed towards the damping element (20, 220) and which penetrates successively into the damping element (20, 220) during the closing of the valve (10, 12).

6. Valve according to Claim 5, **characterized in that** the surface contour (254) of the at least one mechanical stop (30, 32, 232) of the damping element (20, 220) is configured in such a way that a progressive damping characteristic curve for the stroke rod (26, 226) of the valve (10, 12) is obtained.

7. Valve according to Claim 5 or 6, **characterized in that** the surface contour (252) of the mechanical stop (32, 232) has a spoke-shaped basic structure running radially outward from the stroke rod.

8. Valve according to one of Claims 5 to 7, **characterized in that** the surface contour (254) of the mechanical stop (30, 32, 232) tapers to a point in the direction of the damping element (20, 220).

9. Valve according to one of Claims 3 to 8, **characterized in that** the means (28, 30, 32, 228, 232) are produced in one piece with the stroke rod (26, 226).

10. Valve according to one of the preceding claims, **characterized in that** the stroke rod (26, 226) is manufactured essentially from plastic.

11. Valve according to Claim 10, **characterized in that** the at least one valve member (20, 220) is pressed directly onto the stroke rod (26, 226).

12. Valve according to one of the preceding claims, **characterized in that** the valve (10, 12) possesses an electromagnetic actuator (60).

13. Valve according to one of the preceding claims, **characterized in that** a second outlet duct with an associated valve seat and valve member branches off from the valve chamber (18, 218) of the valve (10, 12).

## Revendications

1. Soupape, notamment pour une installation de chauffage et/ou de refroidissement à fluide, régulée, d'un véhicule automobile, comportant une chambre (18, 218) reliée à au moins un canal d'entrée (14, 214) et à au moins un canal de sortie (16, 216) ainsi qu'une tige de translation (26, 226) commandée par un actionneur, au moins un organe de soupape (20, 220) porté par la tige de translation (26, 226), et coopérant avec au moins un siège de soupape (24, 224) de la chambre (18, 218), et au moins un élément amortisseur (20, 220) prévu pour réduire la vitesse de la tige de translation (26, 226) lors de la fermeture de la soupape (10, 12) et servir en même temps d'organe d'obturation (20, 220),
**caractérisée en ce qu'**
au moins un élément amortisseur (20, 220) est coulissant axialement par rapport à la tige de translation (26, 226), notamment sur la tige de translation (26, 226).

2. Soupape selon la revendication 1,
**caractérisée en ce que**
l'élément amortisseur (20, 220) est un organe au moins en partie élastique installé sur la tige de translation (26, 226).

3. Soupape selon la revendication 1,
**caractérisée en ce que**
la tige de translation (26, 226) comporte des moyens (28, 30, 32, 228, 232) limitant la mobilité de l'élément amortisseur (20, 220) par rapport à la tige de translation (26, 226).

4. Soupape selon la revendication 3,
**caractérisée en ce que**
les moyens (28, 30, 32, 228, 232) sont réalisés sous la forme d'une butée mécanique.

5. Soupape selon la revendication 4,
**caractérisée en ce qu'**
au moins une butée mécanique (30, 32, 232) comporte sur son côté (252) tourné vers l'élément amortisseur (20, 220), un contour de surface (254) dirigé vers l'élément amortisseur (20, 220) et qui lors de la fermeture de la soupape (10, 12) pénètre successivement dans l'élément amortisseur (20, 220).

6. Soupape selon la revendication 5,
**caractérisée en ce que**
le contour de surface (254) d'au moins une butée mécanique (30, 32, 232) de l'élément amortisseur (20, 220) est réalisé de façon à avoir une courbe caractéristique d'amortissement progressif pour la tige de translation (26, 226) de la soupape (10, 12).

7. Soupape selon la revendication 5 ou 6,
**caractérisée en ce que**
le contour de surface (252) de la butée mécanique (32, 232) a une forme rayonnante avec une structure de base dirigée radialement vers l'extérieur à partir de la tige de translation.

8. Soupape selon l'une des revendications 5 à 7,
**caractérisée en ce que**
le contour de surface (2524) de la butée mécanique (30, 32, 232) se termine en pointe en direction de l'élément amortisseur (20, 220).

9. Soupape selon l'une des revendications 3 à 8,
**caractérisée en ce que**
les moyens (28, 30, 32, 228, 232) sont réalisés en une seule pièce avec la tige de translation (26, 226).

10. Soupape selon l'une des revendications précédentes,
**caractérisée en ce que**
la tige de translation (26, 226) est fabriquée principalement en matière plastique.

11. Soupape selon la revendication 10,
**caractérisée en ce qu'**
au moins un organe de soupape (20, 220) est pressé de force directement sur la tige de translation (26, 226).

12. Soupape selon l'une des revendications précédentes,
**caractérisée en ce que**
la soupape (10, 12) comporte un actionneur électromagnétique (60).

13. Soupape selon l'une des revendications précédentes,
**caractérisée en ce qu'**
un second canal de sortie muni d'un siège de soupape et d'un organe de soupape est issu de la chambre de soupape (18, 218) de la soupape (10, 12).
